# FASCICULE DE BREVET EUROPEEN

(11) **EP 3 815 316 B1**
(45) Date de publication et mention de la délivrance du brevet: **27.07.2022**
(21) Numéro de dépôt: 19739333.3
(22) Date de dépôt: 13.06.2019
(51) Int. Cl.: H04L 45/02, H04L 47/2466

(54) **PROCÉDÉ DE COMMUNICATION MIS EN OEUVRE PAR UN PREMIER ROUTEUR D'UN SYSTÈME AUTONOME UTILISANT UN PROTOCOLE DE ROUTAGE INTERNE**
KOMMUNIKATIONSVERFAHREN MIT EINEM ERSTEN ROUTER EINES AUTONOMEN SYSTEMS UNTER VERWENDUNG EINES INTERNEN GATEWAY-PROTOKOLLS
COMMUNICATION METHOD IMPLEMENTED BY A FIRST ROUTER OF AN AUTONOMOUS SYSTEM USING AN INTERIOR GATEWAY PROTOCOL

(30) Priorité: 28.06.2018 FR 1855911
(43) Date de publication de la demande: 05.05.2021
(73) Titulaire: ORANGE, 92130 Issy-les-Moulineaux (FR)
(72) Inventeur: DECRAENE, Bruno, 92326 Châtillon Cedex (FR); ATHIAS, Isabelle, 92326 Châtillon Cedex (FR)
(74) Mandataire: Cabinet Beau de Loménie
(86) Numéro de dépôt international: PCT/FR2019/051429
(87) Numéro de publication internationale: WO 2020/002792

(56) Documents cités:
- CN-A- 106 961 391
- US-A1- 2017 195 214
- DECRAENE ORANGE S LITKOWSKI ORANGE BUSINESS SERVICE H GREDLER RTBRICK INC A LINDEM CISCO SYSTEMS P FRANCOIS C BOWERS JUNIPER NETWO: "Shortest Path First (SPF) Back-Off Delay Algorithm for Link-State IGPs; rfc8405.txt", SHORTEST PATH FIRST (SPF) BACK-OFF DELAY ALGORITHM FOR LINK-STATE IGPS; RFC8405.TXT, INTERNET ENGINEERING TASK FORCE, IETF; STANDARD, INTERNET SOCIETY (ISOC) 4, RUE DES FALAISES CH- 1205 GENEVA, SWITZERLAND, 26 juin 2018 (2018-06-26), pages 1-14, XP015126347,
- LACHARITE M WANG COMMUNICATIONS RESEARCH CENTRE CANADA P MINET INSTITUT NATIONAL DE RECHERCHE EN INFORMATIQUE ET EN AUTOMATIQUE T: "Hierarchical OLSR; draft-lacharite-manet-holsr-01.txt", HIERARCHICAL OLSR; DRAFT-LACHARITE-MANET-HOLSR-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 1, 18 novembre 2008 (2008-11-18), XP015059386,

## Description

L'invention se rapporte au domaine général des télécommunications.

Elle concerne plus particulièrement un protocole de routage interne mis en œuvre dans un système autonome (aussi connu sous l'appellation de routage IGP pour Interior ou Internai Gateway Protocol ») dans le contexte de réseaux à commutation de paquets et notamment de réseaux IP/MPLS (Internet Protocol/Multi Protocol Label Switching). De façon connue en soi, un système autonome (ou AS pour Autonomous System) désigne un réseau ou plus généralement un ensemble comprenant une pluralité de routeurs et une pluralité de liens ou d'interconnexions, généralement sous la responsabilité d'une même autorité administrative (appelée opérateur du système autonome), et au sein duquel est appliquée une politique de routage interne cohérente. Aucune limitation n'est attachée à la nature des services de télécommunication transportés par les réseaux considérés.

Les protocoles de routage interne (i.e. qui sont mis en œuvre pour le routage de paquets de données au sein du système autonome considéré) doivent déterminer des tables de routages cohérentes dans l'ensemble du système autonome, ce qui nécessite que les routeurs participants à ce protocole de routage interne s'échangent des messages suffisamment rapidement pour permettre cette vision commune.

En particulier, les protocoles à états de liens tels que par exemple les protocoles IS-IS (Integrated System - Integrated System), OSPF (Open Shortest Path First), etc., sont des protocoles de bas niveau qui s'appuient sur l'hypothèse que tous les routeurs du système autonome disposent d'une vision (c'est-à-dire d'une connaissance) topologique commune du système autonome, autrement dit, des différents routeurs du système autonome ainsi que des interconnexions existant entre ces routeurs. A cet effet, chaque routeur du système autonome mémorise une base de données topologique reflétant la topologie du système autonome et la partage avec ses routeurs voisins du système autonome. De proche en proche, cela permet une synchronisation des bases de données topologiques maintenues par tous les routeurs du système autonome. C'est cette base de données topologique qui permet à chaque routeur de déterminer une route dans le système autonome pour le transport des paquets de données qu'il reçoit jusqu'au routeur de sortie du système autonome.

La découverte de la topologie du système autonome nécessite pour, chaque routeur, la découverte préalable de ses routeurs IGP voisins et de leur état de fonctionnement. Ceci est réalisé par l'échange régulier de messages « hello » avec ses voisins. Chaque routeur construit en outre un ou plusieurs messages de description de topologie, se décrivant lui-même ainsi que ses propres liens vers ses routeurs voisins. Ces messages sont appelés Link State Advertisement (LSA) pour le protocole OSPF et Link State Packet (LSP) pour le protocole IS-IS.

L'ensemble de tous ces messages LSA/LSP permet la connaissance complète de la topologie du réseau. Ils forment la base de données de topologie (Link State Data Base (LSDB)). Chaque routeur conserve en mémoire une copie de cette base de données de topologie. Cette base de données est diffusée à tous les routeurs du protocole de routage interne par réplication de proche en proche (de routeur voisin à routeur voisin). Cette étape de diffusion des messages LSA/LSP est appelée inondation ou « flooding ». Lorsqu'un routeur modifie un de ses propres messages de description de topologie, ce routeur le rediffuse à ses voisins, qui eux-mêmes le rediffuseront à leurs propres voisins, et ainsi de suite jusqu'à ce que l'ensemble des routeurs du réseau disposent de ce nouveau message de description de topologie et ainsi disposent tous de la même LSDB. Enfin, un troisième type de messages IGP permet à deux routeurs voisins de vérifier qu'ils disposent de la même liste de messages de description de topologie, et donc de la même topologie.

Dans la suite de la description, ces messages échangés entre les routeurs qui transportent des informations permettant le routage des paquets de données dans le système autonome sont désignés par « messages du protocole de routage interne » (par opposition aux paquets de données à proprement parler véhiculés entre les routeurs grâce aux informations de routage échangées entre les routeurs et au protocole de routage interne mis en œuvre).

Tout délai retardant la synchronisation des bases de données topologiques maintenues par les routeurs, autrement dit tout délai dans le mécanisme de flooding mis en œuvre, peut se traduire, en cas de panne d'un routeur du système autonome et/ou d'un changement de topologie du système autonome, par une augmentation du nombre de paquets de données perdus. De même, toute incohérence temporaire entre les bases de données topologiques (même de quelques dizaines de millisecondes) est susceptible d'entrainer des incohérences de routage, des micro-boucles, des pertes de paquets de données et/ou une saturation d'interface(s) dans le système autonome.

Dans le même temps, il faut veiller à ne pas saturer les routeurs du système autonome avec les messages du protocole de routage interne échangés lors de cette synchronisation. A cet effet, les opérateurs des systèmes autonomes implémentent généralement une approche très conservatrice consistant à paramétrer « en dur » au niveau de la configuration du routeur ou du logiciel du routeur (c'est-à-dire de façon permanente) un délai prédéterminé et fixe entre deux messages envoyés par un routeur à un voisin (par exemple 33ms ou 100ms).

En vue d'améliorer les performances du protocole de routage interne et notamment du flooding, une optimisation de ce délai pourrait être envisagée par les opérateurs des systèmes autonomes, par exemple de façon régulière. Toutefois une telle optimisation s'avère longue et complexe à réaliser de sorte qu'elle n'est jamais mise en œuvre par les opérateurs des systèmes autonomes.

Bien que décrit en référence à un protocole de routage interne à états de liens, des problèmes similaires se posent également pour d'autres protocoles de routage interne, tels que par exemple le protocole RIP (Routing Information Protocol) ou RIPnG (nouvelle Génération).

A l'Internet Engineering Task Force, IETF, et sous le Request for Comments, RFC, 8405, les auteurs identifient le besoin de réduire les ressources utilisées par les protocoles de routage. Autrement, la publication CN106961391 A divulgue l'ajustement de la transmission des messages du protocole de routage à la capacité de la liaison entre nodes de réseau.

### Objet et résumé de l'invention

L'invention propose une solution simple permettant notamment d'améliorer les performances d'un protocole de routage interne. Elle concerne plus particulièrement un procédé de communication mis en œuvre par un premier routeur d'un système autonome utilisant un protocole de routage interne, ledit procédé de communication comprenant :
- une étape de détermination d'au moins un paramètre de contrôle de flux pour l'envoi vers le premier routeur de messages du protocole de routage interne, ledit au moins un paramètre de contrôle de flux étant déterminé en fonction d'une capacité du premier routeur à traiter lesdits messages du protocole de routage interne ; et
- une étape d'annonce, dans un message du protocole de routage interne, dudit au moins un paramètre de contrôle à au moins un deuxième routeur du système autonome voisin du premier routeur.

L'invention vise également un procédé d'envoi de messages d'un protocole de routage interne mis en œuvre dans un système autonome, ledit procédé étant mis en œuvre par un routeur du système autonome dit deuxième routeur et comprenant :
- une étape de réception d'un message du protocole de routage interne en provenance d'un autre routeur du système autonome, dit premier routeur, voisin du deuxième routeur, ledit message annonçant au moins un paramètre de contrôle de flux pour des messages du protocole de routage interne, ledit au moins un paramètre de contrôle de flux ayant été déterminé par le premier routeur en fonction d'une capacité de ce premier routeur à traiter lesdits messages du protocole de routage interne ; et
- une étape de détermination de conditions d'envoi d'au moins un message du protocole de routage interne au premier routeur adaptées audit au moins un paramètre de contrôle de flux annoncé par le premier routeur ; et
- une étape d'envoi audit premier routeur dudit au moins un message du protocole de routage interne en appliquant les conditions d'envoi déterminées.

Corrélativement, l'invention concerne également un routeur d'un système autonome, dit premier routeur, le système autonome utilisant un protocole de routage interne et le premier routeur comprenant :
- un module de détermination, configuré pour déterminer au moins un paramètre de contrôle de flux pour des messages du protocole de routage interne envoyés au premier routeur, ledit au moins un paramètre de contrôle de flux étant déterminé en fonction d'une capacité du premier routeur à traiter lesdits messages du protocole de routage interne ; et
- un module d'annonce, configuré pour annoncer ledit au moins un paramètre de contrôle à au moins un deuxième routeur du système autonome voisin du premier routeur.

L'invention vise aussi un routeur d'un système autonome, dit deuxième routeur, le système autonome utilisant un protocole de routage interne et le deuxième routeur comprenant :
- un module de réception, apte à recevoir un message du protocole de routage interne en provenance d'un autre routeur du système autonome, dit premier routeur, voisin du deuxième routeur, ledit message annonçant au moins un paramètre de contrôle de flux pour l'envoi de messages du protocole de routage interne à destination du premier routeur, ledit au moins un paramètre de contrôle de flux ayant été déterminé par le premier routeur en fonction d'une capacité de ce premier routeur à traiter lesdits messages du protocole de routage interne ; et
- un module de détermination, configuré pour déterminer des conditions d'envoi d'au moins un message du protocole de routage interne au premier routeur adaptées audit au moins un paramètre de contrôle de flux annoncé par le premier routeur ; et
- un module d'envoi, configuré pour envoyer audit premier routeur ledit au moins un message du protocole de routage interne en appliquant lesdites conditions d'envoi.

L'invention propose donc une solution simple à mettre en œuvre pour améliorer les performances d'un protocole de routage interne dans un système autonome qui consiste, pour un (premier) routeur du système autonome, à annoncer à ses voisins dans le système autonome (deuxièmes routeurs au sens de l'invention), un (ou plusieurs) paramètre(s) de contrôle de flux destiné(s) à être appliqué(s) par ces derniers aux flux de messages du protocole de routage interne qu'ils envoient à destination du premier routeur, ce(s) paramètre(s) de contrôle de flux étant déterminé(s) par le premier routeur en fonction de ses propres capacités de traitement des messages du protocole de routage interne. Par paramètre de contrôle de flux, on entend au sens de l'invention, un paramètre qui permet au voisin qui le reçoit d'adapter les caractéristiques du flux de messages du protocole de routage interne envoyé à destination du premier routeur et en particulier typiquement le débit ou la fréquence d'envoi de ces messages.

On note qu'un tel paramètre de contrôle de flux peut être destiné à contrôler le flux de tous les messages du protocole de routage interne envoyés vers le premier routeur ou seulement d'une partie de ces messages. Ainsi, par exemple, dans le cas des protocoles de routage à états de liens, on peut envisager que ce paramètre de contrôle de flux soit destiné à contrôler le flux des messages de synchronisation des bases de topologie seulement.

Un tel paramètre de contrôle est par exemple :
- un paramètre représentatif d'un débit maximal d'envoi de messages du protocole de routage interne au premier routeur ; et/ou
- un paramètre représentatif d'une taille d'une mémoire du premier routeur destinée à stocker temporairement des messages du protocole de routage interne reçus par le premier routeur ; et/ou
- un paramètre représentatif d'un temps maximum de traitement par le premier routeur de l'ensemble des messages du protocole de routage interne ou d'une catégorie de messages du protocole de routage interne précédemment reçus par le premier routeur et stockés dans une mémoire du premier routeur.

Le(s) paramètre(s) de contrôle de flux annoncés par le premier routeur permet(tent) ainsi à ses voisins de moduler l'envoi des messages du protocole de routage interne en fonction des capacités de traitement de ces messages du premier routeur, c'est-à-dire par exemple de ses caractéristiques matérielles (ex. taille de sa mémoire, puissance et nombre de CPU dont il dispose, etc.), de la façon dont il gère l'ordonnancement des messages, de son état de charge, de sa vitesse de traitement des messages, etc. Grâce à la connaissance de ce(s) paramètre(s) de contrôle, chaque voisin du premier routeur n'est plus contraint d'appliquer un délai arbitraire entre deux messages envoyés vers le premier routeur (par exemple deux messages de synchronisation de bases de topologie dans le cas d'un protocole IGP à états de liens), déterminé de façon conservatrice par rapport à l'ensemble des routeurs appartenant au système autonome, mais a la liberté d'appliquer (en fonction de ses propres capacités par exemple, ou de son état) un délai plus court le cas échéant pour transmettre plus rapidement ces messages vers le premier routeur si les capacités de ce dernier le permettent. Bien qu'un délai plus court soit appliqué, celui-ci est choisi avantageusement en adéquation avec les capacités de traitement du premier routeur de sorte qu'il permet d'éviter une saturation du premier routeur.

Les performances du protocole de routage interne peuvent donc être grandement améliorées. L'invention offre en effet la possibilité d'une communication plus rapide entre les routeurs du système autonome des messages du protocole de routage interne et des informations de routage véhiculées par ceux-ci quand cela est possible, permettant une réduction des pertes de paquets de données dans le système autonome ainsi que des micro-boucles susceptibles de saturer des liens de ce dernier (une micro-boucle est une boucle temporaire mais pénalisante créée dans le routage des paquets en raison d'un retard de synchronisation entre deux tables de routage). Il en résulte une meilleure stabilité du système autonome.

Il convient par ailleurs de noter que les ressources du système autonome consommées par l'invention pour mettre en place une communication plus rapide des informations de routage entre les routeurs sont largement compensées par les ressources économisées en raison notamment des calculs de routage inutiles basés sur des données de routage obsolètes ou partielles qui sont évités, y compris dans des situations d'instabilité du système autonome,

Avantageusement, l'amélioration de la rapidité de la communication des informations de routage est réalisée tout en offrant la garantie de ne pas saturer les routeurs du système autonome : les paramètres de contrôle de flux permettant de contrôler le débit d'envoi des messages du protocole de routage interne vers un routeur sont en effet déterminés et annoncés par ce routeur qui est en définitive le mieux placé pour connaître ses propres capacités de réception et de traitement des messages, que ce soit de façon générale ou à un instant donné.

L'invention permet en outre d'une part, d'adapter la vitesse d'envoi des messages du protocole de routage interne en fonction des capacités de chaque routeur du système autonome, mais également de tenir compte d'une évolution de ces capacités dans le temps, par exemple en raison d'évolutions matérielles ou logicielles. Il suffit pour cela à un routeur concerné de modifier les paramètres de contrôle de flux qu'il annonce à ses voisins.

Par ailleurs, l'invention permet également une adaptation de la vitesse d'envoi des messages du protocole de routage interne en fonction du rôle de chaque routeur au sein du système autonome. Ainsi, à titre d'exemple, les routeurs de cœur qui sont considérés comme ayant un rôle crucial en terme de routage ont généralement des capacités de traitement plus importantes et sont soumis à une charge du plan de contrôle plus faible liée au faible nombre de clients qui leur sont raccordés. L'invention permet de prioriser plus fortement la communication des informations de routage vers ce type de routeurs.

L'invention permet en outre, au premier routeur, comme détaillé davantage ultérieurement, d'annoncer des paramètres de contrôle de flux différents à chacun de ses voisins (second routeurs au sens de l'invention), par exemple afin de prioriser ses ressources de réception de messages à des voisins dont le rôle est plus important ou la place dans la topologie plus centrale.

L'invention a ainsi une application privilégiée mais non limitative dans le contexte des protocoles de routage interne à états de liens, en offrant une amélioration du « flooding » au sein du système autonome. Elle peut toutefois s'appliquer à d'autres protocoles de routage interne, tels que par exemples aux protocoles RIP et RIPnG.

L'invention peut s'appliquer avantageusement à tout type de routeurs, et notamment de routeurs IP/MPLS, et à tout type de réseau, tel que des réseaux d'opérateurs de télécommunications, des réseaux d'entreprises, ou des centres de données (« data centers » en anglais) connus pour s'appuyer souvent sur des réseaux maillés qui posent de nombreuses difficultés notamment pour la mise à l'échelle du flooding.

Comme mentionné précédemment, différents types de paramètres de contrôle de flux peuvent être déterminés et annoncés par le premier routeur à ses voisins. Ces paramètres de contrôle de flux de réception sont pertinents pour améliorer l'efficacité de la diffusion des messages et notamment du flooding pour un protocole IGP à états de liens au sein du système autonome car ils sont déterminés par les routeurs eux-mêmes qui vont recevoir et traiter les messages du protocole de routage interne, à partir de la connaissance qu'ils ont de leurs propres capacités de traitement et potentiellement de leur environnement.

Ainsi par exemple, dans un mode particulier de réalisation dans lequel un tel paramètre de contrôle est un paramètre représentatif d'un débit maximal d'envoi de messages du protocole de routage interne au premier routeur, celui-ci est déterminé par le premier routeur à partir d'un nombre de routeurs voisins du premier routeur dans le système autonome et d'une capacité de traitement du premier routeur de messages du protocole de routage interne reçus par le premier routeur et envoyés par ces routeurs voisins.

Les informations utilisées dans ce mode de réalisation pour déterminer le débit maximal d'envoi sont des informations qui peuvent être aisément obtenues par le premier routeur. La capacité de traitement de messages du protocole de routage interne est typiquement une information que manipule déjà le premier routeur dans les mécanismes qu'il met en œuvre pour se protéger de la réception d'un trop grand nombre de messages, en particulier lors des attaques de dénis de service. Ce mode de réalisation est donc particulièrement simple à mettre en œuvre.

Les paramètres de contrôle annoncés par le premier routeur peuvent être déterminés en tenant compte d'autres éléments. Par exemple, dans un mode particulier de réalisation, lors de l'étape de détermination, au moins un dit paramètre de contrôle est déterminé en fonction en outre d'au moins un élément parmi :
- une capacité d'envoi des messages du protocole de routage interne requise pour le deuxième routeur compte tenu de son rôle dans le système autonome ;
- une position du premier routeur et/ou du deuxième routeur dans une topologie du système autonome ;
- un débit d'une interface de commutation de paquets du premier routeur ou d'un nombre d'interfaces de commutation de paquets par processeur du premier routeur ;
- une capacité de filtrage de protection contre une attaque de déni de service du premier routeur.

Ce mode de réalisation permet d'améliorer encore davantage l'efficacité du flooding ou plus généralement de la diffusion des messages du protocole de routage interne au sein du système autonome. Il permet notamment au premier routeur de tenir compte également de la nature et des besoins de ses routeurs voisins lors de la détermination des paramètres de contrôle. Ainsi, le premier routeur peut déterminer des paramètres de contrôle qui varient d'un voisin à l'autre en fonction de son rôle par exemple dans le système autonome et privilégier une transmission plus rapide des messages en provenance de certains routeurs plutôt que d'autres. L'invention offre donc une grande flexibilité dans la politique de contrôle de flux qui peut être mise en œuvre dans le système autonome grâce aux informations annoncées par les routeurs.

En outre, comme mentionné précédemment, l'invention permet de tenir compte d'une potentielle évolution du système autonome et de l'état et/ou des capacités de ses routeurs (ex. évolution matérielle ou logicielle).

L'invention permet aussi au premier routeur de déterminer dynamiquement les paramètres de contrôle qu'il préconise d'appliquer aux messages de routage qui lui sont destinés.

Ainsi notamment, dans un mode particulier de réalisation, lors de l'étape de détermination, au moins un dit paramètre de contrôle peut être déterminé en fonction en outre d'au moins un élément parmi :
- un état de stabilité du protocole de routage interne et/ou du système autonome ; et/ou
- un état de charge du premier routeur ; et/ou
- un paramètre de contrôle de flux pour des messages du protocole de routage interne annoncé par au moins un routeur du système autonome voisin du premier routeur ou connu du premier routeur pour ledit au moins un routeur.

A titre illustratif, la stabilité du système autonome peut être déterminée par le premier routeur à partir du nombre de messages IGP de changement de topologies/routage dans le système autonome. Si ce nombre est faible, le réseau est en fonctionnement nominal et l'on souhaite réagir rapidement aux changement de topologies : le premier routeur compte tenu de ses capacités de traitement, peut désirer recevoir rapidement ces messages dans ce contexte et donc fournir un paramètre de contrôle de flux à ses voisins les autorisant à transmettre plus ou plus rapidement ces messages vers lui. En revanche, si de nombreux messages IGP de changement de topologies sont échangés, le réseau est en situation instable on peut souhaiter privilégier la stabilité du routage plutôt que sa vitesse de mise à jour. Le premier routeur peut dans ce contexte annoncer un paramètre de contrôle de flux qui vise à ralentir l'envoi des messages dans sa direction de sorte à ne pas saturer.

L'annonce à proprement parler des paramètres de contrôles de flux déterminés par le premier routeur peut être réalisée via différents types de messages déjà prévus ou non dans le protocole de routage interne.

Dans un mode particulier de réalisation lors de l'étape d'annonce, le message du protocole de routage interne annonçant ledit au moins un paramètre de contrôle est un message de notification d'une présence du premier routeur envoyé à ses routeurs voisins dans le système autonome et/ou de vérification d'un état de ces routeurs voisins.

Un tel message est typiquement un message « hello » couramment usité dans les protocoles de routage interne et qui est envoyé périodiquement par chaque routeur du système autonome pour signaler sa présence à ses routeurs voisins et vérifier l'état de ces derniers. Ce mode de réalisation permet d'implémenter facilement l'invention en s'appuyant sur des messages existant déjà véhiculés dans le système autonome. En outre, le fait que ces messages soient envoyés périodiquement permet une mise à jour aisée des paramètres de contrôle auprès des voisins du premier routeur. Bien entendu, on peut également envisager l'envoi de tels messages sur détection d'un événement particulier (par exemple une évolution du paramètre de contrôle) en plus de l'envoi périodique déjà prévu par le protocole de routage interne.

Les paramètres de contrôle peuvent être transmis également dans d'autres types de messages, comme par exemple dans des messages de description de topologie tels que les messages LSP pour le protocole IS-IS et LSA pour le protocole OSPF ou des messages de synchronisation de la base de données de topologie tels que des messages CSNP (Complete Sequence Number Packet) ou PSNP (Partial Sequence Number Packet) prévus dans le protocole IS-IS ou un message Database Description prévu dans le protocole OSPF. On peut également envisager, dans un autre mode de réalisation, un message dédié permettant au premier routeur d'annoncer, à ses voisins, les paramètres de contrôle de flux qu'il a déterminés.

Dans un mode particulier de réalisation, les différentes étapes du procédé de communication et/ou du procédé d'envoi sont déterminées par des instructions de programmes d'ordinateurs.

En conséquence, l'invention vise aussi un programme d'ordinateur sur un support d'informations, ce programme étant susceptible d'être mis en œuvre dans un routeur ou plus généralement dans un ordinateur, ce programme comportant des instructions adaptées à la mise en œuvre des étapes d'un procédé de communication ou d'un procédé d'envoi tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple une ROM de circuit microélectronique, une mémoire optique par exemple un DVD ROM, mémoire électronique, par exemple une mémoire flash, ou encore un moyen d'enregistrement magnétique, par exemple un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

L'invention vise également un système autonome comprenant au moins un premier routeur conforme à l'invention (i.e. apte à mettre en œuvre le procédé de communication selon l'invention) et un deuxième routeur conforme à l'invention (i.e. apte à mettre en œuvre le procédé d'envoi selon l'invention).

Le système autonome selon l'invention bénéficie des mêmes avantages mentionnés précédemment que les premier et deuxième routeurs selon l'invention et que les procédés de communication et d'envoi selon l'invention.

Dans un mode de réalisation particulier de l'invention, le système autonome comprend en outre au moins un troisième routeur voisin du premier routeur, ce troisième routeur comprenant un module de réception, apte à recevoir un message du protocole de routage interne en provenance du premier routeur, ledit message annonçant au moins un paramètre de contrôle de flux pour l'envoi de messages du protocole de routage interne à destination du premier routeur, ledit au moins un paramètre de contrôle de flux ayant été déterminé par le premier routeur en fonction d'une capacité de ce premier routeur à traiter lesdits messages du protocole de routage interne, ledit troisième routeur étant configuré pour ignorer ledit au moins un paramètre de contrôle annoncé par le premier routeur lors de l'envoi d'au moins un message du protocole de routage interne à ce premier routeur.

Autrement dit, le troisième routeur, bien que recevant le(s) paramètres de contrôle annoncé(s) par le premier routeur, ne l'applique pas lors de l'envoi des messages du protocole de routage interne au premier routeur, et continue d'utiliser par exemple la valeur de délai entre deux messages avec laquelle il a été configuré en dur pour envoyer ses messages vers le premier routeur. Dans ce mode de réalisation, les routeurs du système autonome ont ainsi la liberté d'appliquer ou non les paramètres de contrôle de flux qui leur sont annoncés par leurs voisins. On note qu'une telle configuration du troisième routeur peut être figée ou au contraire peut évoluer dans le temps, par exemple en fonction d'un état du troisième routeur, ou d'autres facteurs.

On peut également envisager, dans d'autres modes de réalisation, que le procédé de communication, le procédé d'envoi, le premier routeur, le deuxième routeur et le système autonome selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de façon schématique, un système autonome et des routeurs conformes à l'invention, dans un mode particulier de réalisation ;
- la figure 2 illustre l'architecture matérielle des routeurs de la figure 1 dans un mode particulier de réalisation ;
- la figure 3 représente les différents modules fonctionnels des routeurs de la figure 1 ;
- la figure 4 représente, sous forme d'ordinogramme, les principales étapes d'un procédé de communication selon l'invention, tel qu'il est mis en œuvre par un routeur de la figure 1 ; et
- la figure 5 représente, sous forme d'ordinogramme, les principales étapes d'un procédé d'envoi selon l'invention, tel qu'il est mis en œuvre par un routeur de la figure 1.

### Description détaillée de l'invention

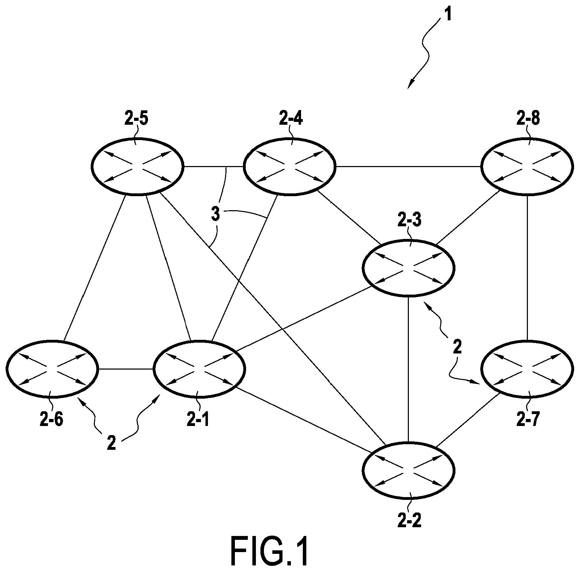

La **figure 1** représente, dans son environnement, un système autonome ou AS 1, conforme à l'invention, dans un mode particulier de réalisation.

Dans ce mode de réalisation, le système autonome 1 est un réseau comprenant une pluralité de routeurs conformes à l'invention, désignés par la référence générale 2, reliés entre eux via des liens ou interconnexions 3. Le système autonome 1 met en œuvre un protocole de routage interne IGP (pour Interior ou Internai Gateway Protocol) pour le routage des paquets de données échangés au sein du ou des réseaux IP, tel que par exemple un protocole de routage interne à états de lien comme IS-IS ou OSPF. Toutefois, cette hypothèse n'est en aucun cas limitative et l'invention peut s'appliquer à d'autres types de protocoles de routage interne, tels que par exemple aux protocoles RIP ou RIPnG.

Par ailleurs, aucune limitation n'est attachée à la nature des services de télécommunication transportés par les réseaux du système autonome 1.

Comme mentionné précédemment, un protocole de routage interne à états de liens mis en œuvre par le système autonome 1 est un protocole de bas niveau qui s'appuie sur l'hypothèse que tous les routeurs 2 disposent d'une vision (c'est-à-dire d'une connaissance) topologique commune du système autonome 1, autrement dit, des différents routeurs 2 du système autonome 1 ainsi que des interconnexions 3 existant entre ces routeurs. A cet effet, chaque routeur 2 maintient une base de données topologique TOPO-DB reflétant la topologie du système autonome 1 et la partage avec les autres routeurs 2 du système autonome pour permettre une synchronisation des bases de données topologiques maintenues par tous les routeurs du système autonome. C'est cette base de données topologique qui permet à chaque routeur 2 de déterminer une route dans le système autonome pour le transport des paquets de données qu'il reçoit jusqu'aux derniers routeurs du système autonome vers leurs destinataires.

La synchronisation des bases de données topologiques TOPO-DB maintenues par les routeurs 2 du système autonome 1 s'appuie de façon connue sur l'échange de messages entre routeurs voisins ou dans l'ensemble du système autonome (ex. messages « hello » d'annonce de présence et/ou de découverte de l'état de ses voisins, messages de description de base de données, etc.). Cette manière de procéder est connue en soi et n'est pas décrite plus en détail ici. Les messages précités échangés entre les routeurs 2 qui transportent des informations permettant le routage des paquets de données dans le système autonome sont des « messages du protocole de routage interne » au sens de l'invention aussi désignés dans la description par messages IGP par souci de simplification.

Conformément à l'invention, les routeurs 2 du système autonome 1 sont configurés pour permettre une amélioration du mécanisme de flooding mis en œuvre au sein du système autonome 1 par rapport à l'état de la technique qui consiste à configurer en dur au niveau de chaque routeur 2 du système autonome 1, une valeur notée ici d caractérisant le délai devant être appliqué (respecté) par le routeur 2 entre deux messages IGP de description de topologie consécutifs envoyés à ses voisins (par exemple d= 33ms ou 100ms).

Plus particulièrement à cet effet, dans le mode de réalisation illustré à la figure 1, chacun des routeurs 2 est configuré pour mettre en œuvre à la fois le procédé de communication selon l'invention et le procédé d'envoi selon l'invention. Autrement dit :
- chacun des routeurs 2 est configuré pour annoncer à ses voisins dans le système autonome 1, un ou plusieurs paramètres de contrôle de flux qu'il a lui-même déterminés pour réguler l'envoi des messages du protocole de routage (ou d'une catégorie de messages du protocole de routage interne, comme par exemple les messages de description de base de données topologique) dans sa direction ; et
- chacun des routeurs 2 est configuré pour envoyer vers tout ou partie de ses voisins des messages du protocole de routage interne en prenant en considération le ou les paramètres de contrôle qui lui ont été communiqués par ces derniers. Par prendre en considération les paramètres de contrôle, on entend ici qu'un routeur adapte ses conditions d'envoi de tout ou partie des messages IGP à destination du routeur lui ayant communiqué ces paramètres de contrôle : par exemple si ce paramètre de contrôle est un débit maximal d'envoi des messages du protocole de routage interne, le routeur adapte la fréquence d'envoi de ces messages à destination du routeur voisin concerné de sorte à ne pas dépasser ce débit maximal vers ce routeur voisin et en tentant de se rapprocher de ce débit maximal afin d'optimiser l'envoi des messages du protocole de routage interne. Cet exemple n'est donné qu'à titre illustratif, et d'autres exemples de paramètres de contrôle pouvant être envisagés dans le cadre de l'invention sont détaillés ultérieurement.

Ainsi, dans le mode de réalisation illustré à la figure 1, chacun des routeurs 2 est un premier routeur et un deuxième routeur au sens de l'invention. On note toutefois que dans un mode particulier de réalisation, on peut envisager qu'un routeur 2 soit configuré pour appliquer les paramètres de contrôle de flux qui lui sont communiqués que par certains voisins ou types de voisins (par exemple par des routeurs de cœur), et ignorer les paramètres de contrôle de flux envoyés par d'autres voisins.

Par ailleurs, les paramètres de contrôle annoncés dans le cadre de l'invention peuvent concerner de manière générale tous les messages du protocole de routage interne ou seulement une catégorie de messages du protocole de routage interne (par exemple les messages de synchronisation des bases de données topologiques qui sont critiques pour le mécanisme de flooding). Dans le mode de réalisation décrit ici, on considère par souci de simplification que les paramètres de contrôle de flux concernent tous les messages IGP.

Dans un autre mode de réalisation, on peut envisager que certains routeurs du système autonome 1 bien que recevant des paramètres de contrôle de flux annoncés par leurs voisins, soient configurés pour ignorer totalement ces paramètres de contrôle de flux, et par exemple, continuer à utiliser une valeur fixe et prédéterminée configurée en dur sur ces routeurs comme dans l'état de la technique, pour envoyer les messages du protocole de routage interne à leurs voisins (troisièmes routeurs au sens de l'invention). Cette configuration peut être figée ou être amenée à évoluer dans le temps en fonction de différents facteurs.

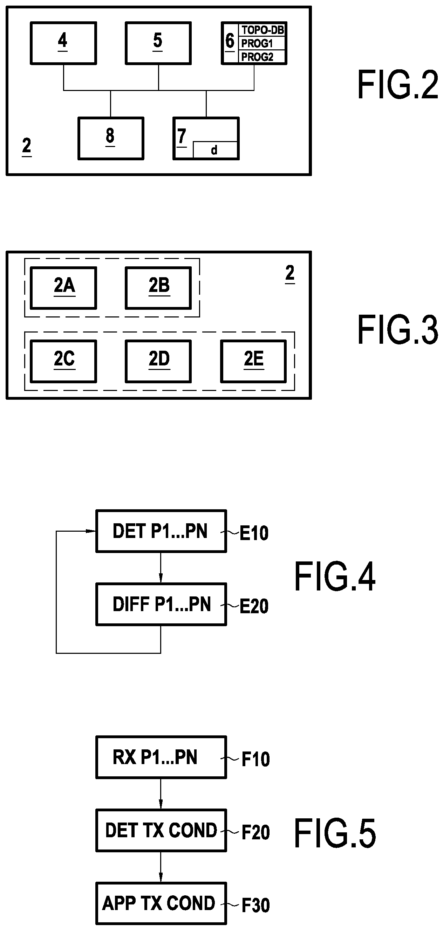

Dans le mode de réalisation décrit ici, les routeurs 2 du système autonome ont l'architecture matérielle d'un ordinateur, telle que représentée à la **figure 2****.**

Il comprend notamment un processeur 4, une mémoire morte 5, une mémoire vive 6 (dans laquelle est stockée par exemple la base de données topologique TOPO-DB), une mémoire non volatile 7 (dans laquelle est stockée par exemple la valeur d configurée en dur au niveau de chaque routeur 2) ainsi que des moyens de communication 8. Ces moyens de communication 8 permettent au routeur 2 de communiquer avec les autres routeurs du système autonome AS1, et plus particulièrement avec ses routeurs voisins dans le système autonome. De façon connue, deux routeurs sont considérés comme voisins lorsqu'il existe une interconnexion (active) entre eux et qu'ils s'échangent régulièrement des messages, par exemple « hello » pour les protocoles de routage interne à états de liens. Les moyens de communication 8 comprennent ainsi notamment une pile du protocole IGP mis en œuvre dans le système autonome 1 ainsi qu'au moins une interface de communication telle que par exemple une interface de communication filaire ou sans fil. Aucune limitation n'est attachée à la nature de cette interface de communication et notamment à la technologie employée par celle-ci (ADSL, cuivre, fibre optique, satellite, WiFI, Bluetooth, 3G, 4G, 5G, etc.).

La mémoire vive 6 du routeur 2 constitue un support d'enregistrement conforme à l'invention, lisible par le processeur 4 et sur lequel est enregistré un programme d'ordinateur PROG1 et un programme d'ordinateur PROG2 conformes à l'invention, comportant respectivement des instructions pour l'exécution d'un procédé de communication et d'un procédé d'envoi selon l'invention.

Le programme PROG1 définit divers modules fonctionnels et logiciels ici du routeur 2, aptes à mettre en œuvre les étapes du procédé de communication selon l'invention et s'appuyant sur les éléments matériels 4-8 du routeur 2. Ces modules fonctionnels comprennent notamment, dans le mode de réalisation décrit ici, comme illustré à la **figure 3** :
- un premier module de détermination 2A, configuré pour déterminer au moins un paramètre de contrôle de flux pour des messages du protocole de routage interne (messages IGP) qui lui sont envoyés, ce paramètre de contrôle de flux étant déterminé en fonction de la capacité du routeur 2 à traiter les messages du protocole de routage interne ; et
- un module d'annonce 2B, configuré pour annoncer ce paramètre de contrôle à au moins un routeur voisin dans le système autonome 1.

Le programme PROG2 définit également divers modules fonctionnels et logiciels ici du routeur 2, aptes à mettre en œuvre les étapes du procédé d'envoi selon l'invention et s'appuyant sur les éléments matériels 4-8 du routeur 2. Ces modules fonctionnels comprennent notamment, dans le mode de réalisation décrit ici :
- un module de réception 2C, apte à recevoir un message du protocole de routage interne en provenance d'un routeur voisin du système autonome 1, ce message annonçant au moins un paramètre de contrôle de flux pour l'envoi de messages IGP à destination de ce routeur voisin, ce paramètre de contrôle de flux ayant été déterminé par le routeur voisin en fonction de sa capacité à traiter les messages IGP ; et
- un deuxième module de détermination 2D, configuré pour déterminer des conditions d'envoi d'au moins un message IGP à ce routeur voisin adaptées au(x) paramètre(s) de contrôle de flux annoncé(s) par ce dernier ; et
- un module d'envoi 2E, configuré pour envoyer ledit au moins un message IGP vers ce routeur voisin en appliquant les conditions d'envoi déterminées par le deuxième module de détermination 2D.

Les fonctions des modules 2A à 2E de chaque routeur sont décrites maintenant en référence aux étapes des procédés de communication et d'envoi selon l'invention.

La **figure 4** représente les principales étapes d'un procédé de communication selon l'invention tel qu'il est mis en œuvre par un routeur 2 du système autonome, dans un mode particulier de réalisation. Pour mieux illustrer l'invention, on s'intéresse ici plus particulièrement à la mise en œuvre de ce procédé par le routeur 2-1 représenté sur la figure 1.

Conformément à l'invention, le routeur 2-1 est configuré pour déterminer, via son premier module de détermination 2A, un ou plusieurs paramètres de contrôle de flux notés P1, P2, ..., PN (N désignant un entier supérieur ou égal à 1) pour l'envoi de messages qui lui sont destinés du protocole de routage interne mis en œuvre par le système autonome 1 (étape E10). Ce ou ces paramètres de contrôle sont destinés à permettre aux routeurs voisins du routeur 2-1 (à savoir dans l'exemple illustré à la figure 1 aux routeurs 2-2, 2-3, 2-4, 2-5 et 2-6) d'adapter les conditions d'envoi des messages IGP à destination du routeur 2-1, et notamment d'envoyer les messages IGP (typiquement les messages de synchronisation de bases de données topologiques) à une vitesse supérieure à la vitesse correspondant à la valeur de délai d paramétrée en dur au niveau de chaque routeur 2, l'idée étant d'accélérer la communication des messages IGP à destination du routeur 2-1 lorsque cela est pertinent et possible.

Conformément à l'invention, le ou les paramètres de contrôle P1,...,PN sont déterminés par le routeur 2-1 via son premier module de détermination 2A en fonction d'une capacité du routeur 2-1 à traiter les messages IGP. Cette capacité peut dépendre de différents facteurs et être estimée par le premier module de détermination 2A de différentes manières.

Ainsi, par exemple cette capacité de traitement peut correspondre notamment à la capacité de service (capacité CPU) considérée par les mécanismes de protection contre les attaques de déni de service classiquement implémentés par les routeurs d'un système autonome (et notamment par les routeurs 2 du système autonome 1). De façon connue, une attaque de déni de service se traduit par un envoi d'un très grand nombre de messages d'annonce vers un ou plusieurs routeurs du système autonome dans le but mal intentionné d'excéder leur capacité à traiter ces messages. Cette capacité désigne le nombre maximum de messages pouvant être stockés et traités par le CPU du routeur 2-1 et au-delà duquel les messages arrivant sont rejetés en vue d'éviter une saturation du routeur. Elle est connue du routeur puisqu'il l'utilise pour mettre en œuvre les mécanismes précités de protection contre les attaques de déni de service (par exemple elle est configurée en dur au niveau de la mémoire non volatile 7 du routeur 2-1), et peut être obtenue aisément par le premier module de détermination 2A.

La capacité de traitement des messages IGP du routeur 2-1 peut également être estimée en fonction d'autres facteurs comme par exemple de la taille d'un buffer ou d'une mémoire que le routeur 2-1 dédie au traitement des messages IGP, autrement dit qui est destiné(e) à stocker les messages IGP arrivant de ses routeurs voisins avant leur traitement à proprement parler en vue de mettre à jour sa base de données topologique TOPO-DB.

Différents paramètres de contrôle de flux P1,...,PN peuvent être déterminés à partir de cette capacité de traitement par le routeur 2-1 comme par exemple :
- un paramètre P1 représentatif d'un débit maximal d'envoi de messages IGP au routeur 2-1 ;
- un paramètre P2 représentatif d'une taille d'un buffer ou d'une mémoire du routeur 2-1 destiné(e) à stocker les messages IGP reçus par le routeur 2-1 et envoyés par ses voisins ;
- un paramètre P3 représentatif d'un temps maximum de traitement par le routeur 2-1 des messages IGP reçus par le routeur 2-1 et envoyés par ses voisins, et stockés dans un buffer ou une mémoire du routeur 2-1.

Dans le mode de réalisation décrit ici, ces paramètres de contrôle de flux sont déterminés par voisin, et les paramètres P1 et P2 sont exprimés respectivement en nombre de messages par seconde et en nombre de messages. En variante, d'autres unités peuvent être envisagées bien entendu de même que d'autres paramètres de contrôle de flux.

Pour déterminer le paramètre P1, le premier module de détermination 2A utilise par exemple la capacité de service précédemment évoquée et la divise par son nombre de voisins dans le système autonome 1 (5 dans l'exemple illustré à la figure 1).

Pour déterminer le paramètre P2, le premier module de détermination 2A divise de façon similaire la taille du buffer ou de la mémoire qu'il dédie au stockage des messages IGP par son nombre de voisins dans le système autonome 1.

Le premier module de détermination 2A peut déterminer pour le paramètre P3 une limite supérieure du temps maximum de traitement qu'il lui semble nécessaire pour traiter les messages IGP envoyés par ses voisins et stockés dans le buffer ou la mémoire prévu(e) à cet effet.

Il est à noter qu'il n'est pas nécessaire pour le routeur 2-1 de déterminer tous les paramètres de contrôle de flux précités. Il peut en effet se contenter de déterminer l'un au moins de ces paramètres de contrôle de flux, comme par exemple le paramètre P1.

Par ailleurs, le routeur 2-1 peut prendre en compte d'autres facteurs en plus de sa capacité de traitement des messages IGP pour déterminer le ou les paramètres de contrôle de flux P1...PN, et notamment des facteurs ou des caractéristiques propres à ses routeurs voisins depuis lesquels il reçoit les messages IGP. Peu importe la façon dont il obtient ces caractéristiques : elles peuvent être connues du routeur 2-1 parce qu'il a été configuré avec, ou elles peuvent être annoncées par les routeurs voisins en question par exemple dans leurs capacités ou « Router capability » comme décrit notamment dans le document RFC 7981 édité par l'IETF pour le protocole IS-IS ou dans le document RFC 7770 pour le protocole OSPF, ou dans une autre variante encore, il peut déduire ces caractéristiques d'informations de topologie standards annoncées par le protocole de routage interne (ex. rôle ou position du routeur voisin dans le système autonome 1, nombre de voisins pour chaque routeur ou débits sur chacune de ses interfaces).

Ainsi, plus précisément, le routeur 2-1 peut par exemple prendre en compte au moins un autre élément parmi :
- une capacité d'envoi des messages IGP requise pour ses routeurs voisins compte tenu de leurs rôles dans le système autonome 1 : il s'agit là pour le routeur 2-1 de tenir compte des besoins (en termes notamment de débit, de rythme ou de volume) de ses routeurs voisins en termes d'annonce des messages IGP pour éventuellement allouer davantage de ressources de traitement de ces messages IGP aux routeurs voisins qui en ont le plus besoin ou l'usage et au contraire d'éviter d'en allouer trop aux routeurs voisins qui n'en ont pas besoin ou ne sont pas en mesure d'en profiter ;
- sa position et/ou la position de ses routeurs voisins dans la topologie du système autonome 1 (ex. s'agit-il de routeurs de cœur, ayant un rôle important dans le routage et pour lesquels il s'agit de rendre plus efficace le routage, ou de routeurs d'accès du système autonome 1, plus orientés vers des traitement dédiés aux clients) ;
- un débit d'une interface d'un de ses ou de son processeur(s) de commutation de routage ou le nombre d'interfaces dont il dispose par processeur de commutation de routage ; et/ou
- sa capacité de filtrage de messages pour se protéger contre les dénis de service (mécanisme présent sur tous les routeurs).

Comme mentionné précédemment, le routeur 2-1 détermine dans le mode de réalisation décrit ici des paramètres de contrôle de flux par voisin. Ces paramètres de contrôle de flux peuvent différer d'un routeur voisin à un autre (notamment si des caractéristiques des routeurs voisins sont prises en compte), ou en variante être identiques pour tous les routeurs voisins du routeur 2-1.

Il convient en outre de noter que les paramètres de contrôle de flux peuvent être amenés à évoluer dans le temps. Cette évolution peut être lente (par exemple liée à un changement ponctuel de topologie du système autonome 1 et du voisinage du routeur 2-1), ou être plus dynamique et résulter notamment d'une prise en compte de facteurs susceptibles de varier de façon plus rapide dans le temps. C'est le cas par exemple lorsque le routeur 2-1 tient compte d'au moins un élément parmi les éléments suivants pour déterminer les paramètres de contrôle de flux P1,...,PN :
- un état de stabilité du protocole de routage interne et/ou du système autonome 1 ;
- son état de charge ;
- un paramètre de contrôle de flux pour des messages IGP annoncé par l'un de ses voisins ou connu pour ce voisin.

Ces exemples ne sont donnés qu'à titre illustratif et d'autres facteurs encore peuvent être considérés par le routeur 2-1 en plus de sa capacité de traitement des messages IGP pour déterminer le ou les paramètres de contrôle de flux P1,...,PN.

Par ailleurs, il convient également de noter que dans le cas où les paramètres de contrôle de flux P1,...,PN ne concernent qu'une catégorie de messages IGP, ils peuvent être déterminés soit en tenant compte des capacités du premier routeur et/ou de ses routeurs voisins (capacités de réception et de traitement, d'envoi, temps de traitement, etc.) à l'égard de cette catégorie de messages IGP spécifiquement soit à l'égard de l'ensemble des messages IGP échangés dans le cadre du protocole de routage interne.

Une fois les paramètres de contrôle de flux P1,...,PN déterminés par le premier module de détermination 2A du routeur 2-1, celui-ci annonce ces paramètres de contrôle à ses voisins via son module d'annonce 2B (étape E20). On désigne dans la suite de la description par message IGP d'annonce le message utilisé par le routeur 2-1 pour annoncer les paramètres de contrôle qu'il a déterminés à ses routeurs voisins.

Dans le mode de réalisation décrit ici, le module d'annonce 2B annonce les paramètres de contrôle P1,...PN dans des messages « hello » de notification de sa présence et/ou de vérification de l'état de ses voisins, dans un champ prévu à cet effet. De tels messages « hello » sont classiquement utilisés dans les protocoles IGP à états de liens comme les protocoles IS-IS et OSPF : ce mode de réalisation s'appuie donc avantageusement sur des messages déjà définis pour ces protocoles, qui sont légèrement modifiés de sorte à inclure un nouveau champ permettant de transporter les paramètres de contrôle de flux P1,...,PN.

On note que de façon connue, les messages « hello » sont envoyés périodiquement par les routeurs d'un système autonome à leurs voisins. Ce mode de réalisation permet donc en outre de signaler à moindre coût une évolution des paramètres de contrôle de flux déterminés par le routeur 2-1.

En variante, d'autres messages peuvent être utilisés par le routeur 2-1 pour annoncer les paramètres de contrôle de flux P1,...,PN qu'il a déterminés, comme par exemple un message IGP prévu spécifiquement à cet effet, ou un message de synchronisation ou de description des bases de données de topologie (ex. messages CSNP/PSNP ou messages LSP diffusés dans les protocoles IGP connus).

Il convient de noter que lorsque le routeur 2-1 détermine des paramètres de contrôle de flux propres à chacun de ses routeurs voisins, il annonce préférentiellement dans le message IGP d'annonce des paramètres de contrôle de flux destiné à ce routeur voisin uniquement les paramètres qui le concernent.

La **figure 5** illustre les principales étapes d'un procédé d'envoi selon l'invention mises en œuvre, dans un mode particulier de réalisation, par les routeurs voisins du routeur 2-1 lorsqu'ils reçoivent le message d'annonce des paramètres de contrôle de flux du routeur 2-1. Dans l'exemple envisagé à la figure 1, chacun des routeurs voisins du routeur 2-1, autrement dit les routeurs 2-2, 2-3, 2-4, 2-5 et 2-6, met en œuvre ce procédé. La figure 5 est décrite en référence au routeur 2-2 seulement à titre illustratif.

Sur réception par le module de réception 2C du routeur 2-2 du message d'annonce envoyé par le routeur 2-1 contenant les paramètres de contrôle de flux P1,...,PN (étape F10), le routeur 2-2 extrait ces paramètres et les transmet à son deuxième module de détermination 2D. Le deuxième module de détermination 2D détermine des conditions d'envoi des messages IGP destinés au routeur 2-1 adaptées à ces paramètres de contrôle de flux (étape F20). Par adaptées à ces paramètres de contrôle de flux, on entend que les conditions d'envoi des messages IGP ainsi déterminées respectent (dans la mesure du possible et des capacités du routeur 2-2) les paramètres de contrôle de flux transmis par le routeur 2-1 : autrement dit, le deuxième module de détermination 2D adapte les conditions d'envoi des messages IGP à destination du routeur 2-1 de sorte qu'elles ne dépassent pas et si possible s'approchent des paramètres de contrôle de flux transmis par le routeur 2-1. Ainsi, si les paramètres de contrôle de flux transmis comprennent un débit maximal d'envoi des messages IGP, le deuxième module de détermination 2D vérifie si ce débit maximal d'envoi peut être appliqué et/ou atteint par le module d'envoi 2E du routeur 2-2 pour envoyer les messages IGP au routeur 2-1 et le cas échéant retient comme condition d'envoi des messages IGP au routeur 2-1 ce débit maximal (en remplacement de la valeur d préconfigurée en dur séparant normalement l'envoi de deux messages IGP), de sorte à accélérer la transmission des messages IGP vers le routeur 2-1.

Les conditions d'envoi ainsi déterminées par le deuxième module de détermination 2D sont ensuite transmises au module d'envoi 2E du routeur 2-2, qui envoie dès lors les messages IGP destinés au routeur 2-1 en respectant les conditions ainsi déterminées (étape F30).

Il convient de noter qu'il n'est pas toujours possible au routeur 2-2 d'adapter les conditions d'envoi des messages IGP au routeur 2-1 conformément aux paramètres de contrôle de flux qu'il a reçus de ce dernier. Dans ce cas, le deuxième module de détermination 2D est configuré pour adapter les conditions d'envoi des messages IGP de sorte à se rapprocher le plus possible des paramètres de contrôle de flux reçus compte tenu des capacités courantes du routeur 2-2. Le routeur 2-2 applique ces conditions d'envoi tant qu'il n'a pas reçu de nouvelles valeurs pour les paramètres de contrôle de flux du routeur 2-1 et tant que son état le lui permet.

Dans un autre mode de réalisation, le routeur 2-2 peut prendre en compte les paramètres de contrôle annoncés par le routeur 2-1 uniquement pour une catégorie de messages IGP, tels que par exemple pour les messages de synchronisation de bases de données topologiques.

En outre, et comme mentionné précédemment, on peut envisager d'avoir au sein du système autonome 1 des routeurs qui ignorent les paramètres de contrôle de flux émis par leurs routeurs voisins et continuent d'appliquer la valeur d avec laquelle ils ont été configurés en dur qui désigne le délai à respecter pour l'envoi successif de deux messages IGP.

Dans un autre mode de réalisation, les routeurs peuvent être configurés pour appliquer les paramètres de contrôle reçus à certains de leurs voisins et ne pas les appliquer pour d'autres voisins, en fonction par exemple de la position de ces voisins dans la topologie du système autonome ou de leur rôle dans le système autonome. Il est ainsi laissé une grande liberté à chaque routeur d'appliquer ou non les paramètres de contrôle de flux préconisés par leurs voisins.

## Revendications

1. Procédé de communication mis en œuvre par un premier routeur (2-1) d'un système autonome (1) utilisant un protocole de routage interne, ledit procédé de communication comprenant :
- une étape de détermination (E10) d'au moins un paramètre de contrôle de flux pour l'envoi vers le premier routeur de messages du protocole de routage interne, ledit au moins un paramètre de contrôle de flux étant déterminé en fonction d'une capacité du premier routeur à traiter lesdits messages du protocole de routage interne ; et
- une étape d'annonce (E20), dans un message du protocole de routage interne, dudit au moins un paramètre de contrôle à au moins un deuxième routeur (2-2,2-3,2-4,2-5,2-6) du système autonome voisin du premier routeur.

2. Procédé de communication selon la revendication 1 dans lequel ledit au moins un paramètre de contrôle comprend :
- un paramètre représentatif d'un débit maximal d'envoi de messages du protocole de routage interne au premier routeur ; et/ou
- un paramètre représentatif d'une taille d'une mémoire du premier routeur destinée à stocker temporairement des messages du protocole de routage interne reçus par le premier routeur ; et/ou
- un paramètre représentatif d'un temps maximum de traitement par le premier routeur de l'ensemble des messages du protocole de routage interne ou d'une catégorie de messages du protocole de routage interne précédemment reçus par le premier routeur et stockés dans une mémoire du premier routeur.

3. Procédé de communication selon la revendication 2 dans lequel ledit paramètre représentatif d'un débit maximal d'envoi est déterminé à partir d'un nombre de routeurs voisins du premier routeur dans le système autonome et d'une capacité de traitement du premier routeur des messages du protocole de routage interne reçus par le premier routeur et envoyés par ces routeurs voisins.

4. Procédé de communication selon l'une quelconque des revendications 1 à 3 dans lequel lors de l'étape de détermination, au moins un dit paramètre de contrôle est déterminé en fonction en outre d'au moins un élément parmi :
- une capacité d'envoi de messages du protocole de routage interne requise pour le deuxième routeur compte tenu de son rôle dans le système autonome ;
- une position du premier routeur et/ou du deuxième routeur dans une topologie du système autonome ;
- un débit d'une interface de commutation de paquets du premier routeur ou d'un nombre d'interfaces de commutation de paquets par processeur du premier routeur ;
- une capacité de filtrage de protection contre une attaque de déni de service du premier routeur.

5. Procédé de communication selon l'une quelconque des revendications 1 à 4 dans lequel lors de l'étape de détermination, au moins un dit paramètre de contrôle est déterminé en fonction en outre d'au moins un élément parmi :
- un état de stabilité du protocole de routage interne et/ou du système autonome ; et/ou
- un état de charge du premier routeur ; et/ou
- un paramètre de contrôle de flux pour des messages du protocole de routage interne annoncé par au moins un routeur du système autonome voisin du premier routeur ou connu du premier routeur pour ledit au moins un routeur.

6. Procédé de communication selon l'une quelconque des revendications 1 à 5 dans lequel lors de l'étape d'annonce, le message du protocole de routage interne annonçant ledit au moins un paramètre de contrôle est un message de notification d'une présence du premier routeur envoyé à ses routeurs voisins dans le système autonome et/ou de vérification d'un état de ces routeurs voisins.

7. Procédé de communication selon l'une quelconque des revendications 1 à 6 dans lequel le protocole de routage interne est un protocole de routage interne à états de liens.

8. Procédé de communication selon la revendication 7 dans lequel ledit au moins un paramètre de contrôle de flux pour l'envoi vers le premier routeur de messages du protocole de routage interne est un paramètre de contrôle de flux pour l'envoi de messages de synchronisation de bases de données topologiques.

9. Procédé d'envoi de messages d'un protocole de routage interne mis en œuvre dans un système autonome (1), ledit procédé étant mis en œuvre par un routeur du système autonome dit deuxième routeur (2-2) et comprenant :
- une étape de réception (F10) d'un message du protocole de routage interne en provenance d'un autre routeur du système autonome, dit premier routeur (2-1), voisin du deuxième routeur, ledit message annonçant au moins un paramètre de contrôle de flux pour des messages du protocole de routage interne, ledit au moins un paramètre de contrôle de flux ayant été déterminé par le premier routeur en fonction d'une capacité de ce premier routeur à traiter lesdits messages du protocole de routage interne ;
- une étape de détermination (F20) de conditions d'envoi d'au moins un message du protocole de routage interne au premier routeur adaptées audit au moins un paramètre de contrôle de flux annoncé par le premier routeur ; et
- une étape d'envoi (F30) audit premier routeur dudit au moins un message du protocole de routage interne en appliquant les conditions d'envoi déterminées.

10. Programme d'ordinateur (PROG1,PROG2) comportant des instructions pour l'exécution des étapes du procédé de communication selon l'une quelconque des revendications 1 à 8 ou pour l'exécution des étapes du procédé d'envoi selon la revendication 9 lorsque ledit programme est exécuté par un ordinateur.

11. Support d'enregistrement (6) lisible par un ordinateur sur lequel est enregistré un programme d'ordinateur selon la revendication 10.

12. Routeur (2) d'un système autonome (1), dit premier routeur, le système autonome utilisant un protocole de routage interne et le premier routeur comprenant :
- un module de détermination (2A), configuré pour déterminer au moins un paramètre de contrôle de flux pour des messages du protocole de routage interne envoyés au premier routeur, ledit au moins un paramètre de contrôle de flux étant déterminé en fonction d'une capacité du premier routeur à traiter lesdits messages du protocole de routage interne ; et
- un module d'annonce (2B), configuré pour annoncer ledit au moins un paramètre de contrôle à au moins un deuxième routeur du système autonome voisin du premier routeur.

13. Routeur (2) d'un système autonome, dit deuxième routeur, le système autonome utilisant un protocole de routage interne et le deuxième routeur comprenant :
- un module de réception (2C), apte à recevoir un message du protocole de routage interne en provenance d'un autre routeur du système autonome, dit premier routeur, voisin du deuxième routeur, ledit message annonçant au moins un paramètre de contrôle de flux pour l'envoi de messages du protocole de routage interne à destination du premier routeur, ledit au moins un paramètre de contrôle de flux ayant été déterminé par le premier routeur en fonction d'une capacité de ce premier routeur à traiter lesdits messages du protocole de routage interne ; et
- un module de détermination (2D), configuré pour déterminer des conditions d'envoi d'au moins un message du protocole de routage interne au premier routeur adaptées audit au moins un paramètre de contrôle de flux annoncé par le premier routeur ; et
- un module d'envoi (2E), configuré pour envoyer audit premier routeur ledit au moins un message du protocole de routage interne en appliquant lesdites conditions d'envoi.

14. Système autonome (1) comprenant au moins un premier routeur selon la revendication 12 et un deuxième routeur selon la revendication 13.

15. Système autonome (1) selon la revendication 14 comprenant en outre au moins un troisième routeur voisin du premier routeur, ledit troisième routeur comprenant un module de réception, apte à recevoir un message du protocole de routage interne en provenance du premier routeur, ledit message annonçant au moins un paramètre de contrôle de flux pour l'envoi de messages du protocole de routage interne à destination du premier routeur, ledit au moins un paramètre de contrôle de flux ayant été déterminé par le premier routeur en fonction d'une capacité de ce premier routeur à traiter lesdits messages du protocole de routage interne, ledit troisième routeur étant configuré pour ignorer ledit au moins un paramètre de contrôle annoncé par le premier routeur lors de l'envoi d'au moins un message du protocole de routage interne à ce premier routeur.

## Patentansprüche

1. Kommunikationsverfahren, das von einem ersten Router (2-1) eines ein internes Routing-Protokoll verwendenden autonomen Systems (1) durchgeführt wird, wobei das Kommunikationsverfahren enthält:
- einen Schritt der Bestimmung (E10) mindestens eines Flusssteuerungsparameters zum Senden von Nachrichten des internen Routing-Protokolls an den ersten Router, wobei der mindestens eine Flusssteuerungsparameter abhängig von einer Kapazität des ersten Routers bestimmt wird, die Nachrichten des internen Routing-Protokolls zu verarbeiten; und
- einen Schritt der Ankündigung (E20), in einer Nachricht des internen Routing-Protokolls, des mindestens einen Steuerungsparameters an mindestens einen dem ersten Router benachbarten zweiten Router (2-2, 2-3, 2-4, 2-5, 2-6) des autonomen Systems.

2. Kommunikationsverfahren nach Anspruch 1, wobei der mindestens eine Steuerungsparameter enthält:
- einen für eine maximale Sendegeschwindigkeit von Nachrichten des internen Routing-Protokolls an den ersten Router repräsentativen Parameter; und/oder
- einen für eine Größe eines Speichers des ersten Routers, der dazu bestimmt ist, vom ersten Router empfangene Nachrichten des internen Routing-Protokolls vorübergehend zu speichern, repräsentativen Parameter; und/oder
- einen für eine maximale Zeit der Verarbeitung der Gesamtheit der Nachrichten des internen Routing-Protokolls oder einer Kategorie von Nachrichten des internen Routing-Protokolls durch den ersten Router, die vorher vom ersten Router empfangen und in einem Speicher des ersten Routers gespeichert wurden, repräsentativen Parameter.

3. Kommunikationsverfahren nach Anspruch 2, wobei der für eine maximale Sendegeschwindigkeit repräsentative Parameter ausgehend von einer Anzahl von dem ersten Router im autonomen System benachbarten Routern und von einer Kapazität des ersten Routers zur Verarbeitung der Nachrichten des internen Routing-Protokolls bestimmt wird, die vom ersten Router empfangen und von diesen benachbarten Routern gesendet werden.

4. Kommunikationsverfahren nach einem der Ansprüche 1 bis 3, wobei im Bestimmungsschritt mindestens ein Steuerungsparameter abhängig außerdem von mindestens einem der folgenden Elemente bestimmt wird:
- einer Sendekapazität von Nachrichten des internen Routing-Protokolls, die für den zweiten Router unter Berücksichtigung seiner Aufgabe im autonomen System erforderlich ist;
- einer Position des ersten Routers und/oder des zweiten Routers in einer Topologie des autonomen Systems;
- einer Rate einer Paketvermittlungsschnittstelle des ersten Routers oder einer Anzahl von Paketvermittlungsschnittstellen pro Prozessor des ersten Routers;
- eine Kapazität der Schutzfilterung gegen einen Denial-of-Service-Angriff des ersten Routers.

5. Kommunikationsverfahren nach einem der Ansprüche 1 bis 4, wobei im Bestimmungsschritt mindestens ein Steuerungsparameter außerdem abhängig von mindestens einem der folgenden Elemente bestimmt wird:
- einem Stabilitätszustand des internen Routing-Protokolls und/oder des autonomen Systems; und/oder
- einem Ladezustand des ersten Routers; und/oder
- einem Flusssteuerungsparameter für Nachrichten des internen Routing-Protokolls, der von mindestens einem dem ersten Router benachbarten oder dem ersten Router bekannten Router des autonomen Systems angekündigt wird, für den mindestens einen Router.

6. Kommunikationsverfahren nach einem der Ansprüche 1 bis 5, wobei im Ankündigungsschritt die den mindestens einen Steuerungsparameter ankündigende Nachricht des internen Routing-Protokolls eine Nachricht der Mitteilung eines Vorhandenseins des ersten Routers, die an seine benachbarten Router im autonomen System gesendet wird, und/oder der Überprüfung eines Zustands dieser benachbarten Router ist.

7. Kommunikationsverfahren nach einem der Ansprüche 1 bis 6, wobei das interne Routing-Protokoll ein internes Link-State-Routing-Protokoll ist.

8. Kommunikationsverfahren nach Anspruch 7, wobei der mindestens eine Flusssteuerungsparameter zum Senden von Nachrichten des internen Routing-Protokolls an den ersten Router ein Flusssteuerungsparameter zum Senden von Synchronisationsnachrichten von topologischen Datenbanken ist.

9. Verfahren zum Senden von Nachrichten eines internen Routing-Protokolls, das in einem autonomen System (1) durchgeführt wird, wobei das Verfahren von einem zweiter Router (2-2) genannten Router des autonomen Systems durchgeführt wird und enthält:
- einen Schritt des Empfangs (F10) einer Nachricht des internen Routing-Protokolls von einem anderen, dem zweiten Router benachbarten, erster Router (2-1) genannten Router des autonomen Systems, wobei die Nachricht mindestens einen Flusssteuerungsparameter für Nachrichten des internen Routing-Protokolls ankündigt, wobei der mindestens eine Flusssteuerungsparameter vom ersten Router abhängig von einer Kapazität dieses ersten Routers zur Verarbeitung der Nachrichten des internen Routing-Protokolls bestimmt worden ist;
- einen Schritt der Bestimmung (F20) von Sendebedingungen mindestens einer Nachricht des internen Routing-Protokolls an den ersten Router, die an den vom ersten Router angekündigten mindestens einen Flusssteuerungsparameter angepasst sind; und
- einen Schritt des Sendens (F30) der mindestens einen Nachricht des internen Routing-Protokolls an den ersten Router unter Verwendung der bestimmten Sendebedingungen.

10. Computerprogramm (PROG1, PROG2), das Anweisungen zur Ausführung der Schritte des Kommunikationsverfahrens nach einem der Ansprüche 1 bis 8 oder zur Ausführung der Schritte des Sendeverfahrens nach Anspruch 9 aufweist, wenn das Programm von einem Computer ausgeführt wird.

11. Computerlesbarer Speicherträger (6), auf dem ein Computerprogramm nach Anspruch 10 gespeichert ist.

12. Router (2) eines autonomen Systems (1), erster Router genannt, wobei das autonome System ein internes Routing-Protokoll verwendet und der erste Router enthält:
- ein Bestimmungsmodul (2A), das konfiguriert ist, mindestens einen Flusssteuerungsparameter für an den ersten Router gesendete Nachrichten des internen Routing-Protokolls zu bestimmen, wobei der mindestens eine Flusssteuerungsparameter abhängig von einer Kapazität des ersten Routers bestimmt wird, die Nachrichten des internen Routing-Protokolls zu verarbeiten; und
- ein Ankündigungsmodul (2B), das konfiguriert ist, den mindestens einen Steuerungsparameter mindestens einem dem ersten Router benachbarten zweiten Router des autonomen Systems anzukündigen.

13. Router (2) eines autonomen Systems, zweiter Router genannt, wobei das autonome System ein internes Routing-Protokoll verwendet und der zweite Router enthält:
- ein Empfangsmodul (2C), das fähig ist, eine Nachricht des internen Routing-Protokolls von einem anderen, dem zweiten Router benachbarten, erster Router genannten Router des autonomen Systems zu empfangen, wobei die Nachricht mindestens einen Flusssteuerungsparameter zum Senden von Nachrichten des internen Routing-Protokolls an den ersten Router ankündigt, wobei der mindestens eine Flusssteuerungsparameter vom ersten Router abhängig von einer Kapazität dieses ersten Routers, die Nachrichten des internen Routing-Protokolls zu verarbeiten, bestimmt worden ist; und
- ein Bestimmungsmodul (2D), das konfiguriert ist, Sendebedingungen mindestens einer Nachricht des internen Routing-Protokolls an den ersten Router zu bestimmen, die an den mindestens einen vom ersten Router angekündigten Flusssteuerungsparameter angepasst sind; und
- ein Sendemodul (2E), das konfiguriert ist, die mindestens eine Nachricht des internen Routing-Protokolls unter Anwendung der Sendebedingungen an den ersten Router zu senden.

14. Autonomes System (1), das mindestens einen ersten Router nach Anspruch 12 und einen zweiten Router nach Anspruch 13 enthält.

15. Autonomes System (1) nach Anspruch 14, das außerdem mindestens einen dem ersten Router benachbarten dritten Router enthält, wobei der dritte Router ein Empfangsmodul enthält, das fähig ist, eine Nachricht des internen Routing-Protokolls vom ersten Router zu empfangen, wobei die Nachricht mindestens einen Flusssteuerungsparameter zum Senden von Nachrichten des internen Routing-Protokolls an den ersten Router ankündigt, wobei der mindestens eine vom Flusssteuerungsparameter vom ersten Router abhängig von einer Kapazität dieses ersten Routers, die Nachrichten des internen Routing-Protokolls zu verarbeiten, bestimmt worden ist, wobei der dritte Router konfiguriert ist, den vom ersten Router angekündigten mindestens einen Steuerungsparameter beim Senden mindestens einer Nachricht des internen Routing-Protokolls an diesen ersten Router zu ignorieren.

## Claims

1. Communication method implemented by a first router (2-1) of an autonomous system (1) using an interior gateway protocol, said communication method comprising:
- a step (E10) of determining at least one flow control parameter for sending messages of the interior gateway protocol to the first router, said at least one flow control parameter being determined depending on a capability of the first router to process said messages of the interior gateway protocol; and
- a step (E20) of announcing, in a message of the interior gateway protocol, said at least one control parameter to at least a second router (2-2, 2-3, 2-4, 2-5, 2-6) of the autonomous system which is a neighbour of the first router.

2. Communication method according to Claim 1, wherein said at least one control parameter comprises:
- a parameter representative of a maximum rate at which messages of the interior gateway protocol are sent to the first router; and/or
- a parameter representative of a size of a memory of the first router, which memory is intended to temporarily store messages of the interior gateway protocol which are received by the first router; and/or
- a parameter representative of a maximum time for the first router to process all of the messages of the interior gateway protocol or a category of messages of the interior gateway protocol which were previously received by the first router and stored in a memory of the first router.

3. Communication method according to Claim 2, wherein said parameter representative of a maximum sending rate is determined on the basis of a number of routers which are neighbours of the first router in the autonomous system and of a capability of the first router to process the messages of the interior gateway protocol which are received by the first router and sent by these neighbouring routers.

4. Communication method according to any one of Claims 1 to 3, wherein, during the determining step, at least one said control parameter is determined further depending on at least one element from among:
- a capability to send messages of the interior gateway protocol, which capability is required for the second router taking into account its role in the autonomous system;
- a position of the first router and/or of the second router in a topology of the autonomous system;
- a rate of a packet-switching interface of the first router or of a number of packet-switching interfaces per processor of the first router;
- a capability to filter to protect against a denial-of-service attack on the first router.

5. Communication method according to any one of Claims 1 to 4, wherein, during the determining step, at least one said control parameter is determined further depending on at least one element from among:
- a state of stability of the interior gateway protocol and/or of the autonomous system; and/or
- a state of charge of the first router; and/or
- a flow control parameter for messages of the interior gateway protocol which is announced by at least one router of the autonomous system which is a neighbour of the first router or known to the first router for said at least one router.

6. Communication method according to any one of Claims 1 to 5, wherein, during the announcing step, the message of the interior gateway protocol announcing said at least one control parameter is a message for making a presence of the first router known which is sent to its neighbouring routers in the autonomous system and/or for checking a state of these neighbouring routers.

7. Communication method according to any one of Claims 1 to 6, wherein the interior gateway protocol is a link-state interior gateway protocol.

8. Communication method according to Claim 7, wherein said at least one flow control parameter for sending messages of the interior gateway protocol to the first router is a flow control parameter for sending messages for synchronizing topological databases.

9. Method for sending messages of an interior gateway protocol implemented in an autonomous system (1), said method being implemented by a router of the autonomous system referred to as the second router (2-2) and comprising:
- a step (F10) of receiving a message of the interior gateway protocol originating from another router of the autonomous system, referred to as the first router (2-1), which is a neighbour of the second router, said message announcing at least one flow control parameter for messages of the interior gateway protocol, said at least one flow control parameter having been determined by the first router depending on a capability of this first router to process said messages of the interior gateway protocol;
- a step (F20) of determining conditions for sending at least one message of the interior gateway protocol to the first router which are suitable for said at least one flow control parameter announced by the first router; and
- a step (F30) of sending said at least one message of the interior gateway protocol to said first router, applying the sending conditions which have been determined.

10. Computer program (PROG1, PROG2) comprising instructions for executing the steps of the communication method according to any one of Claims 1 to 8 or for executing the steps of the sending method according to Claim 9 when said program is executed by a computer.

11. Computer-readable storage medium (6) on which a computer program according to Claim 10 is stored.

12. Router (2) of an autonomous system (1), referred to as the first router, the autonomous system using an interior gateway protocol and the first router comprising:
- a determining module (2A), configured to determine at least one flow control parameter for messages of the interior gateway protocol which are sent to the first router, said at least one flow control parameter being determined depending on a capability of the first router to process said messages of the interior gateway protocol; and
- an announcing module (2B), configured to announce said at least one control parameter to at least a second router of the autonomous system which is a neighbour of the first router.

13. Router (2) of an autonomous system, referred to as the second router, the autonomous system using an interior gateway protocol and the second router comprising:
- a receiving module (2C), able to receive a message of the interior gateway protocol originating from another router of the autonomous system, referred to as the first router, which is a neighbour of the second router, said message announcing at least one flow control parameter for sending messages of the interior gateway protocol to the first router, said at least one flow control parameter having been determined by the first router depending on a capability of this first router to process said messages of the interior gateway protocol; and
- a determining module (2D), configured to determine conditions for sending at least one message of the interior gateway protocol to the first router which are suitable for said at least one flow control parameter announced by the first router; and
- a sending module (2E), configured to send said at least one message of the interior gateway protocol to said first router, applying said sending conditions.

14. Autonomous system (1) comprising at least a first router according to Claim 12 and a second router according to Claim 13.

15. Autonomous system (1) according to Claim 14, further comprising at least a third router which is a neighbour of the first router, said third router comprising a receiving module, able to receive a message of the interior gateway protocol originating from the first router, said message announcing at least one flow control parameter for sending messages of the interior gateway protocol to the first router, said at least one flow control parameter having been determined by the first router depending on a capability of this first router to process said messages of the interior gateway protocol, said third router being configured to ignore said at least one control parameter announced by the first router when at least one message of the interior gateway protocol is sent to this first router.
